# EUROPÄISCHE PATENTSCHRIFT

(11) **EP 2 736 769 B1**
(45) Veröffentlichungstag und Bekanntmachung des Hinweises auf die Patenterteilung: **25.10.2017**
(21) Anmeldenummer: 12735780.4
(22) Anmeldetag: 23.06.2012
(51) Int. Cl.: B60R 11/04

(54) **BEFESTIGUNGSANORDNUNG EINES SENSORELEMENTS AN EINEM BEFESTIGUNGSELEMENT EINES KRAFTWAGENS**
FIXING DEVICE FOR FIXING A SENSOR IN A FASTENING DEVICE OF A MOTOR VEHICLE
DISPOSITIF DE FIXATION POUR FIXER UN CAPTEUR DANS UN DISPOSITIF DE FIXATION D'UN VEHICULE

(30) Priorität: 26.07.2011 DE 102011108594
(43) Veröffentlichungstag der Anmeldung: 04.06.2014
(73) Patentinhaber: Daimler AG, 70327 Stuttgart (DE)
(72) Erfinder: BRUSS, Emil, 71116 Gärtringen (DE); FLEMMING, André, 71116 Gärtringen (DE); KRUG, Martin, 76189 Karlsruhe (DE); RITSCHEL, Ulf, 75378 Bad Liebenzell (DE); SCHMIDT, Axel, 70794 Filderstadt (DE)
(74) Vertreter: JENSEN & SON
(86) Internationale Anmeldenummer: PCT/EP2012/002653
(87) Internationale Veröffentlichungsnummer: WO 2013/013746

(56) Entgegenhaltungen:
- EP-A2- 1 810 896
- US-A1- 2007 205 348

## Beschreibung

Die Erfindung betrifft eine Befestigungsanordnung eines Sensorelements, insbesondere einer Kamera, an einem Befestigungselement eines Kraftwagens gemäß dem Oberbegriff von Patentanspruch 1. Die DE 10 2008 050 320 A1 offenbart eine Trägervorrichtung zur Befestigung an einer Scheibe, insbesondere einer Windschutzscheibe, eines Kraftwagens nach dem Oberbegriff von Anspruch 1. Die Trägervorrichtung umfasst eine an der Scheibe befestigbare Trägerplatte, welche zumindest bereichsweise aus einem Kunststoff geschaffen ist und durch welche wenigstens eine Kamera, ein Sensor oder dergleichen getragen ist. Der Kunststoff der Trägerplatte ist mit einem Zusatzwerkstoff, insbesondere mit einem Glaszusatzwerkstoff, versetzt.

Die Trägerplatte kann eine Traganordnung umfassen, welche zwei obere Tragelemente und zwei untere Tragelemente aufweist, gegen welche die Kamera mit einer in eine Richtung weisenden Kraft zu beaufschlagen ist. Diese Kraft wird durch eine Federanordnung mit zwei Federelementen erzeugt. Mittels der Federelemente wird die Kamera gegen Referenzflächen der Tragelemente gedrückt.

Die EP 1 810 896 A2 offenbart eine Halteklammer für einen Sensor, mit einer Platte, die den Sensor abdecken kann, mindestens einem Haltearm und mindestens einem Rastarm, die so ausgebildet sind, dass sie an einem Halterahmen für den Sensor angreifen können, wobei die Halteklammer einstückig ausgebildet ist.

Darüber hinaus offenbart die US 2007/0205348 A1 einen Halterahmen für mindestens ein Trägerelement eines Sensors in einem Kraftfahrzeug, mit einer ebenen Unterseite, die auf eine Scheibe des Kraftfahrzeugs aufklebbar ist, und mit einer Öffnung mit mindestens einer Anlagefläche für das Trägerelement, in der das Trägerelement flächig zur Scheibe positionierbar ist, und mit einem Federelement, mittels welchem eine Kraft auf das Trägerelement aufbringbar ist.

Es ist Aufgabe der vorliegenden Erfindung, eine Befestigungsanordnung eines Sensorelements, insbesondere einer Kamera, an einem Befestigungselement eines Kraftwagens bereitzustellen, bei welcher die Kamera auf besonders kostengünstige Weise am Befestigungselement gehalten ist.

Diese Aufgabe wird durch eine Befestigungsanordnung mit den Merkmalen des Patentanspruchs 1 sowie durch eine Befestigungsanordnung mit den Merkmalen des Patentanspruchs 10 gelöst. Vorteilhafte Ausgestaltungen mit zweckmäßigen und nichttrivialen Weiterbildungen der Erfindung sind in den übrigen Ansprüchen angegeben. Bei einer solchen Befestigungsanordnung eines Sensorelements, insbesondere einer Kamera, an einem Befestigungselement eines Kraftwagens ist das Sensorelement mittels einer Kraft an einem Halteelement des Befestigungselements gehalten. Die Kraft wird dabei durch einen Federbereich eines Federelements der Befestigungsanordnung erzeugt. Unter Beaufschlagung dieser in eine Richtung gerichtete Kraft ist die Kamera somit an dem Halteelement gehalten.

Erfindungsgemäß weist das Federelement wenigstens einen sich an den ersten Federbereich zumindest mittelbar anschließenden und schräg, insbesondere senkrecht, zu dem ersten Federbereich verlaufenden, zwischen dem Befestigungselement und dem Sensorelement angeordneten, zweiten Federbereich auf, an welchem das Sensorelement in eine zur ersten Richtung schräg, insbesondere senkrecht, verlaufende zweite Richtung abgestützt ist, wobei das Federelement über den zweiten Federbereich in die zweite Richtung an dem Befestigungselement abgestützt ist und wobei der zweite Federbereich an einer dem Sensorelement zugewandten und schräg oder senkrecht zur zweiten Richtung verlaufenden Fläche des Befestigungselements zumindest mittelbar anliegt. Mit anderen Worten ermöglicht das Federelement mit ihren zwei Federbereichen eine mehrachsige Befestigung des Sensorelements an dem Befestigungselement, da die Feder mit ihren zwei Federbereichen entlang einer ersten Achse, d.h. in die erste Richtung, und entlang einer zweiten Achse, d.h. in die zweite Richtung wirken kann.

Der erste Federbereich dient dabei insbesondere dem Zweck, das Sensorelement an dem Halteelement relativ zu dem Befestigungselement zu fixieren und zu befestigen, während der zweite Federbereich des Federelements dem Sensorelement als Auflage dient und gegebenenfalls gleichzeitig einen Toleranzausgleich insbesondere infolge von fertigungsbedingten Toleranzen des Befestigungselements und/oder des Sensorelements ermöglicht. Dadurch sind mehrere Funktionen in dem einen Federelement integriert. Diese Funktionsintegration hält die Teileanzahl der Befestigungsanordnung gering, was mit besonders geringen Kosten der Befestigungsanordnung einhergeht. Ferner resultiert aus der geringen Teileanzahl ein besonders geringes Gewicht der Befestigungsanordnung, was einem geringen Gewicht des beispielsweise als Personenkraftwagen ausgebildeten Kraftwagens zugute kommt.

Bevorzugt ist bei der erfindungsgemäßen Befestigungsanordnung lediglich das eine Federelement vorgesehen, mittels welchem das Sensorelement an dem Befestigungselement gehalten ist. Dies hält die Teileanzahl, die Kosten und das Gewicht der erfindungsgemäßen Befestigungsanordnung besonders gering. Darüber hinaus ist dadurch eine einfache, zeit- und kostengünstige Montage des Sensorelements an dem Befestigungselement realisiert, da lediglich das eine Federelement zu montieren ist.

Bei einer weiteren vorteilhaften Ausführungsform der Erfindung weist das Halteelement des Befestigungselements eine Aufnahme, insbesondere einen Hinterschnitt, auf, in welche das Sensorelement mittels der durch das Federelement bewirkten Kraft gehalten ist. Dazu weist das Sensorelement, insbesondere ein Gehäuse dieses, bevorzugt ein Aufnahmeteil auf, wobei vorteilhafterweise eine Außenkontur des Aufnahmeteils zumindest bereichsweise als zu einer Aufnahmekontur der Aufnahme zumindest im Wesentlichen korrespondierende Gegenkontur ausgebildet ist. Dadurch ist eine besonders präzise Montage des Sensorelements an dem Befestigungselement möglich, so dass das Sensorelement in einer erwünschten Soll-Relativlage zum Befestigungselement auf einfache Weise positioniert und befestigt werden kann. Etwaige, insbesondere fertigungsbedingte Toleranzen kann das Federelement insbesondere mittels des zweiten Federbereichs zumindest im Wesentlichen kompensieren.

Dadurch ist es beispielsweise möglich, das Sensorelement zumindest im Wesentlichen winkelgenau relativ zu dem Befestigungselement auszurichten und zu montieren. Dies ist insbesondere dann von Vorteil, wenn das Sensorelement als eine Kamera ausgebildet ist. Dabei kann es sich beispielsweise um eine sogenannte Nachtsichtkamera handeln, mittels welcher auch bei Nacht Bilder zu erfassen und auf wenigstens einem Bildschirm in einem Cockpit des Kraftwagens darzustellen sind.

In weiterer vorteilhafter Ausgestaltung ist das Federelement mit dem Befestigungselement verrastet. Dazu weist beispielsweise das Befestigungselement wenigstens ein Rastelement auf, mit welchem das Federelement zu verrasten bzw. zu verclipsen ist. Dieses Verrasten bzw. Verclipsen ermöglicht eine besonders schnelle und damit zeit- und kostengünstige Montage des Sensorelements an dem Befestigungselement, was insbesondere im Rahmen einer Serienfertigung mit einer großen Stückzahl zu erheblichen Kosteneinsparungen führt.

Weiterhin hat es sich als vorteilhaft gezeigt, wenn das Federelement einen sich an den ersten Federbereich zumindest mittelbar anschließenden und schräg, insbesondere senkrecht, zu dem ersten Federbereich verlaufenden dritten Federbereich aufweist, an welchem das Sensorelement in die zweite Richtung abgestützt ist, wobei der erste Federbereich, insbesondere zumindest im Wesentlichen mittig, zwischen dem zweiten und dem dritten Federbereich angeordnet ist. Dadurch kann sich das Sensorelement beidseitig des ersten Federbereichs an dem Federelement abstützen, so dass eine besonders definierte und insbesondere verkippungsfreie Halterung des Sensorelements an dem Befestigungselement realisiert ist. Dies kommt der Positionierung des Sensorelements relativ zu dem Befestigungselement und damit der Funktionserfüllung des Sensorelements zugute, da dieses definiert relativ zu dem Befestigungselement sowie auch relativ zu dem übrigen Kraftwagen ausgerichtet ist.

Bei einer weiteren vorteilhaften Ausführungsform der Erfindung ist das Federelement über den dritten Federbereich in die zweite Richtung an dem Befestigungselement abgestützt. Dies bedeutet, dass der zweite und/oder der dritte Federbereich zwischen dem Befestigungselement und dem Sensorelement angeordnet ist, wobei der zweite und/oder der dritte Federbereich an der dem Sensorelement zugewandten und schräg, insbesondere senkrecht, zur zweiten Richtung verlaufenden Fläche des Befestigungselements zumindest mittelbar anliegt. Dadurch ist das Sensorelement besonders präzise relativ zum Befestigungselement und damit zum übrigen Kraftwagen ausgerichtet. Insbesondere können dadurch besonders vorteilhaft Toleranzen ausgeglichen werden.

Ebenso kann vorgesehen sein, dass das Sensorelement unter Beaufschlagung der Kraft des Federelements auch in Richtung der Fläche des Befestigungselements und somit gegebenenfalls gegen den zweiten und/oder dritten Federbereich gehalten, insbesondere gedrückt, ist. Mit anderen Worten ist das Sensorelement mittels des Federelements, insbesondere mittels des ersten Federbereichs, sowohl in die erste Richtung als auch in die zweite Richtung mit Kraft beaufschlagt, so dass das Sensorelement besonders fest und gleichzeitig präzise am Befestigungselement gehalten ist.

Bei einer weiteren vorteilhaften Ausführungsform der Erfindung weist das Federelement einen sich an den ersten Federbereich anschließenden und schräg zu dem ersten Federbereich verlaufenden Griffbereich auf, mittels welchem das Federelement handhabbar ist. Dies bedeutet, dass das Federelement über diesen schräg zum ersten Federbereich verlaufenden Griffbereich besonders einfach, komfortabel und somit zeit- und kostengünstig an dem Befestigungselement zu montieren und von diesem zu demontieren ist. Insbesondere ist es möglich, die Montage des Federelements besonders ergonomisch für eine die Montage durchführende Person in Fahrzeughochrichtung von oben her durchzuführen.

In weiterer vorteilhafter Ausgestaltung ist das Federelement einstückig ausgebildet, was die Teileanzahl, das Gewicht und die Kosten der erfindungsgemäßen Befestigungsanordnung besonders gering hält. Alternativ oder zusätzlich kann das Befestigungselement einstückig ausgebildet sein, was ebenso zu einer geringen Teileanzahl, zu einem geringen Gewicht sowie zu geringen Kosten führt.

In weiterer vorteilhafter Ausgestaltung ist das Befestigungselement aus einem Kunststoff gebildet. Dies hält das Gewicht der Befestigungsanordnung gering, was zu einem besonders geringen Gewicht des Kraftwagens führt.

Bei einer vorteilhaften Ausführungsform der Erfindung ist das Federelement zumindest im Wesentlichen aus einem metallischen Werkstoff gebildet. Dies kommt den Federeigenschaften der Federbereiche zugute, wobei diese besonders elastisch ausgebildet werden können. So kann das Sensorelement unter einer relativ hohen Kraftbeaufschlagung besonders fest an dem Befestigungselement gehalten werden.

Zur Erfindung gehört auch eine Befestigungsanordnung für ein Sensorelement, insbesondere eine Kamera, eines Kraftwagens, mit einem ein Halteelement aufweisenden Befestigungselement und mit einem Federelement mit einem Federbereich, mittels welchem eine in eine Richtung orientierte Kraft zum Halten des Sensorelements an dem Halteelement erzeugbar ist.

Erfindungsgemäß ist es vorgesehen, dass das Federelement einen sich an den ersten Federbereich zumindest mittelbar anschließenden und schräg, insbesondere senkrecht, zu dem ersten Federbereich verlaufenden, zweiten Federbereich aufweist, an welchem das Sensorelement in eine zur ersten Richtung schräg oder senkrecht verlaufende zweite Richtung abstützbar ist, wobei der zweite Federbereich in am Befestigungselement gehaltenem Zustand des Sensorelements zwischen diesem und dem Befestigungselement angeordnet ist und an einer dem Sensorelement zugewandten und schräg, insbesondere senkrecht, zur zweiten Richtung verlaufenden Fläche des Befestigungselements zumindest mittelbar anliegt und wobei das Federelement über den zweiten Federbereich in die zweite Richtung an dem Befestigungselement abgestützt ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Rückansicht einer Nachtsichtkamera für einen Kraftwagen, insbesondere einen Personenkraftwagen, welche an einem Befestigungselement des Personenkraftwagens zu befestigen ist;
- Fig. 2: eine schematische Vorderansicht der Nachtsichtkamera gemäß Fig. 1;
- Fig. 3: eine schematische Seitenansicht einer Nachtsichtkamera gemäß den Fig. 1 und 2 mit einer schematischen Darstellung eines Steckerabgangs und eines Sichtfelds der Nachtsichtkamera;
- Fig. 4: ausschnittsweise eine schematische Perspektivansicht einer Befestigungsanordnung der Nachtsichtkamera gemäß den Fig. 1 bis 3 an einem Befestigungselement eines Personenkraftwagens;
- Fig. 5: ausschnittsweise eine weitere schematische Perspektivansicht der Befestigungsanordnung gemäß Fig. 4;
- Fig. 6: ausschnittsweise eine weitere schematische Perspektivansicht der Befestigungsanordnung gemäß den Fig. 4 und 5 ohne die Nachtsichtkamera; und
- Fig. 7: ausschnittsweise eine schematische Vorderansicht der Befestigungsanordnung gemäß Fig. 6.

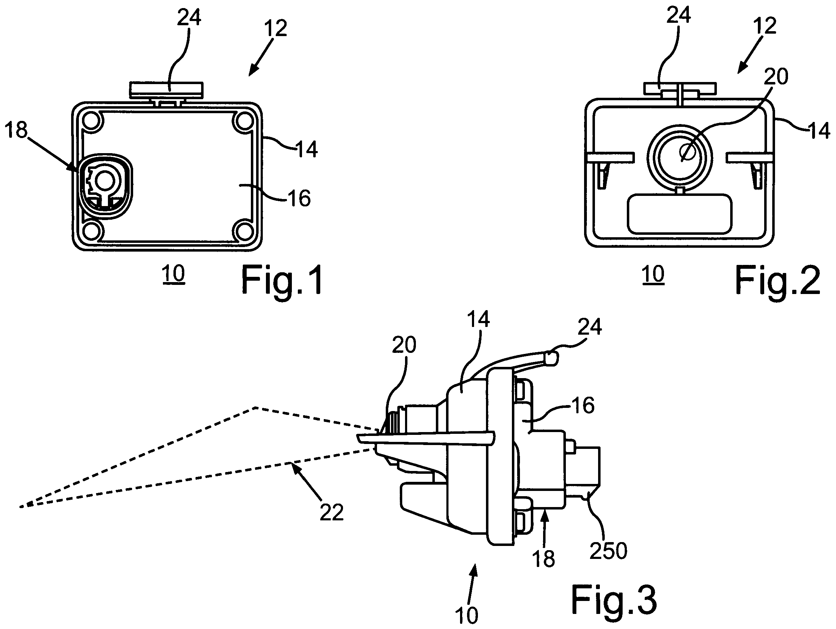

Die Fig. 1 zeigt eine Nachtsichtkamera 10 für einen Personenkraftwagen. Bei der Nachtsichtkamera 10 handelt es sich um ein Kameramodul, welches ein Gehäuse 12 mit einem ersten Gehäuseteil 14 und einem zweiten Gehäuseteil 16 umfasst. Die Gehäuseteile 14, 16 sind unter Ausbildung eines Aufnahmeraums miteinander verbunden, wobei in dem Aufnahmeraum Elektronikbauteile der Nachtsichtkamera 10 insbesondere vor Wasser geschützt angeordnet sind.

Auf einer in der Fig. 1 zu erkennenden Rückseite der Nachtsichtkamera 10 ist ein Steckeranschluss 18 angeordnet, über welchen die Nachtsichtkamera 10 mit einem Stecker und darüber beispielsweise mit einem Bordnetz und mit einem Datenbus des Personenkraftwagens zu verbinden ist. Dadurch kann der Nachtsichtkamera 10 elektrische Energie sowie elektrische Signale zugeführt werden. Ebenso ist es möglich, elektrische Signale von der Nachtsichtkamera 10 abzuführen.

Wie anhand der Fig. 2 zu erkennen ist, ist auf einer Vorderseite der Nachtsichtkamera 10 eine Linse 20 angeordnet, über welche Licht bzw. Lichtreflektionen in den Aufnahmeraum zu optischen Erfassungsmitteln der Nachtsichtkamera 10 eindringen können. Die Nachtsichtkamera 10 bzw. ihre optischen Erfassungsmittel weisen eine besonders hohe Lichtempfindlichkeit auf, so dass sie auch bei Dunkelheit Bilder aus der Umgebung erfassen und auf wenigstens einem Bildschirm in einem Cockpit des Personenkraftwagens darstellen kann. Dies kommt der Fahrsicherheit zugute, da der Fahrer des Personenkraftwagens mit dem menschlichen Auge nicht oder nur sehr schwer erkennbare Elemente wie beispielsweise Passanten, Barrieren und/oder dergleichen über den Bildschirm erkennen kann.

Die Fig. 3 zeigt die Nachtsichtkamera 10 in ihrer Seitenansicht, wobei ein Sichtfeld 22 der Nachtsichtkamera 10 angedeutet ist. Ferner ist in der Fig. 3 ein Steckerabgang 24 zu erkennen, der veranschaulicht, wie der Stecker über das Steckeranschluss 18 mit der Nachtsichtkamera 10 zu verbinden ist.

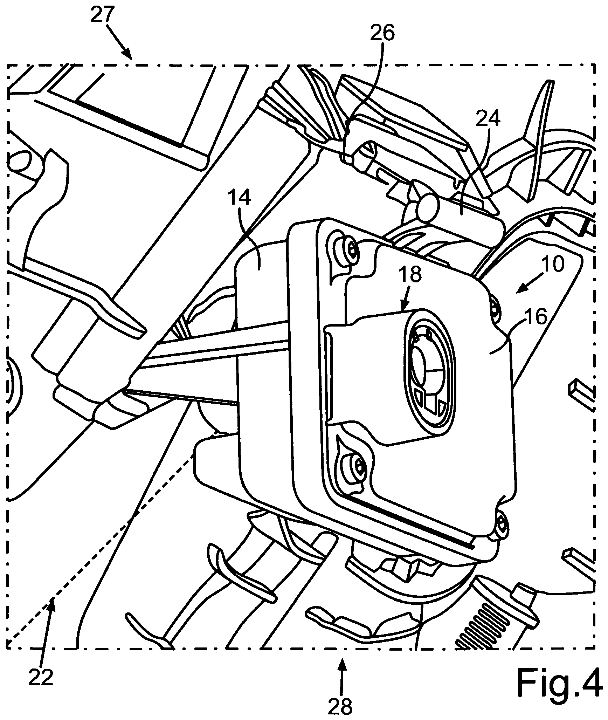

In den Fig. 1 bis 3 ist auch ein Befestigungsbolzen 24 der Nachtsichtkamera 10 zu erkennen, welche durch das Gehäuse 12 gebildet ist. Das Gehäuse 12 und damit der Befestigungsbolzen 20 sind beispielsweise aus einem Kunststoff gebildet. Über den Befestigungsbolzen 24 kann die Nachtsichtkamera 10 an einem Befestigungselement 27 (Fig. 4) des Personenkraftwagens befestigt und somit an dem Personenkraftwagen gehaltert werden.

Die Fig. 4 bis 7 zeigen dabei eine Befestigungsanordnung 28 der Nachtsichtkamera 10 an dem zumindest im Wesentlichen aus einem Kunststoff gebildeten Befestigungselement 27, welches eine Befestigungsplatte platte 26 umfasst. Über das Befestigungselement 27 ist die Nachtsichtkamera 10 am übrigen Personenkraftwagen gehalten.

Wie insbesondere der Seitenansicht der Fig. 3 zu entnehmen ist, weist der Befestigungsbolzen 24 außenumfangsseitig eine von einer kreisrunden Kontur abweichende Kontur auf. Mit anderen Worten ist der Befestigungsbolzen 24 außenumfangsseitig unrund ausgebildet. Dadurch ist eine Verdrehsicherung geschaffen, so dass die Nachtsichtkamera 10 definiert und winkelgenau an dem Befestigungselement 27 in einer gewünschten Relativstellung zur Befestigungsplatte 26 und damit zum übrigen Personenkraftwagen montiert werden und sich nicht um eine zumindest im Wesentlichen in Fahrzeugquerrichtung bzw. zumindest im Wesentlichen parallel zur Längserstreckungsrichtung des Befestigungsbolzens 24 erstreckenden Drehachse drehen kann.

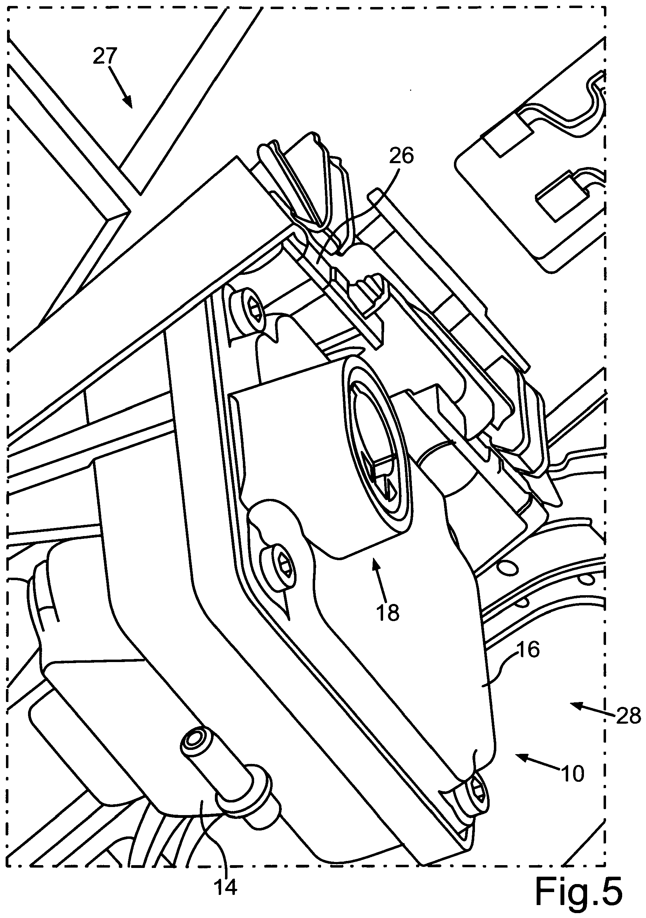

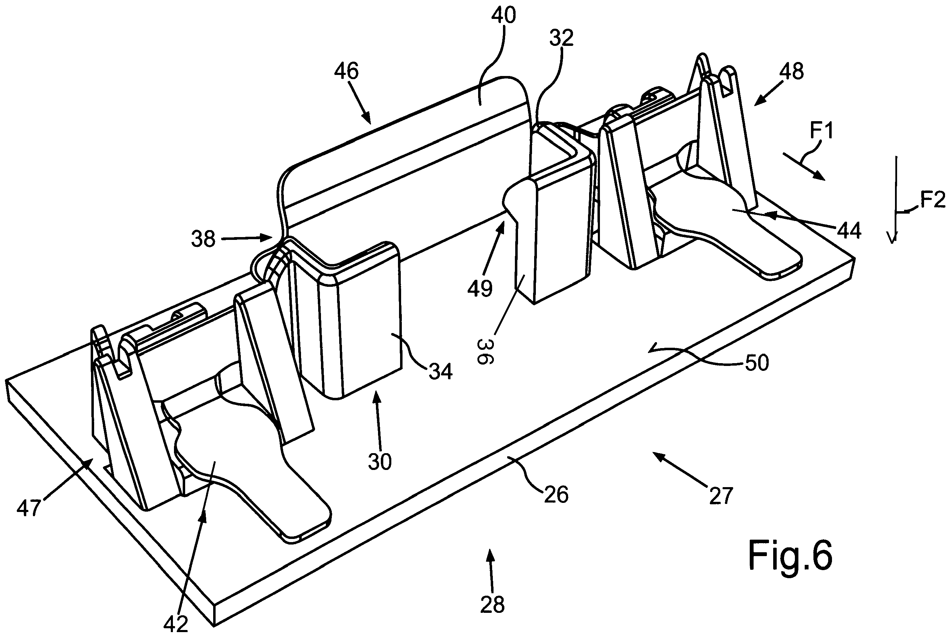

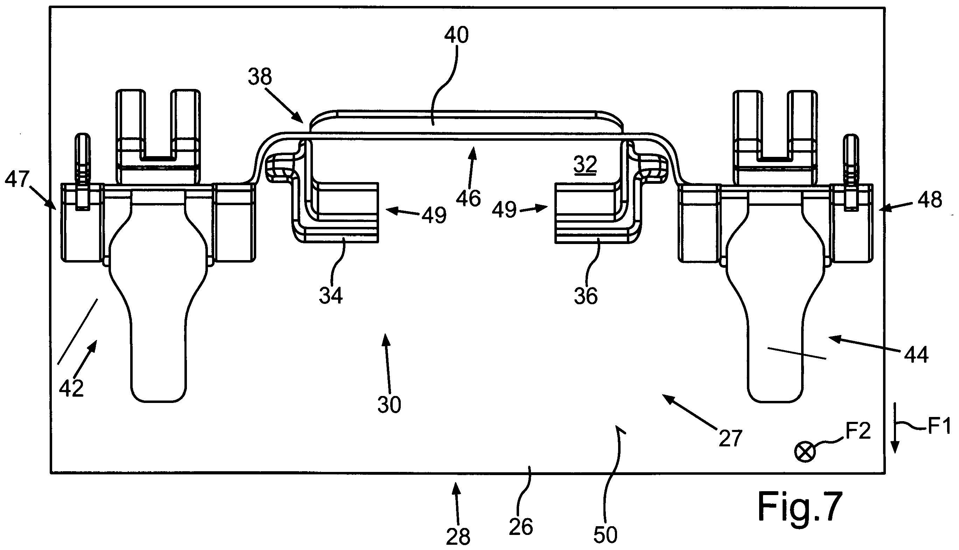

Wie den Fig. 4 und 5 und insbesondere den Fig. 6 und 7 zu entnehmen ist, weist das Befestigungselement 27 ein an der Befestigungsplatte angeordnetes Halteelement 30 mit einer Aufnahme 32 auf. Die Aufnahme 32 ist dabei teilweise von einem ersten Halteteil 34 und teilweise von einem zweiten Halteteil 36 des Halteelements 30 begrenzt. Um die Teileanzahl und damit die Kosten der Befestigungsanordnung 28 gering zu halten, sind die Halteteile 34, 36 einstückig mit der Befestigungsplatte 26 aus dem Kunststoff gebildet.

Der Befestigungsbolzen 24 ist bei der Befestigungsanordnung 28 verdrehsicher und winkelgenau in der Aufnahme 32 angeordnet und ist mittels einer Kraft in der Aufnahme fixiert.

Die Kraft ist dabei durch einen ersten Kraftpfeil F1 angedeutet, verläuft in eine erste Richtung zumindest im Wesentlichen parallel zur Befestigungsplatte 26 und wird mittels eines ersten Federbereichs 38 eines Federelements 40 der Befestigungsanordnung 28 erzeugt. Einerseits schließt sich an den ersten Federbereich 38 ein zweiter Federbereich 42 des Federelements 40 an. Andererseits des ersten Federbereichs 38 schließt sich an den ersten Federbereich 38 ein dritter Federbereich 44 des Federelements 40 an. Die Federbereiche 38, 42, 44 sind dabei einstückig miteinander ausgebildet, wobei das Federelement 40 somit als einstückiges Blechbauteil aus einem metallischen Werkstoff gebildet ist.

Zur Befestigung des Federelements 40 an der Befestigungsplatte 26 sind einstückig mit der Befestigungsplatte 26 ausgebildete Rastelemente 47, 48 vorgesehen. Das erste Rastelement 47 ist dabei dem zweiten Federbereich 42 zugeordnet, während das zweite Rastelement 48 dem dritten Federbereich 44 zugeordnet ist. Das Federelement 40 ist somit über seine Federbereiche 42, 44 jeweilig mit den Rastelementen 47, 48 verrastet und somit mit dem Befestigungselement 27 verclipst. Dadurch ist eine zeit- und kostengünstige Montage möglich. Zur Darstellung einer besonders zeit- und kostengünstigen Montage schließt sich an den ersten Federbereich 38 ein Griffbereich 46 des Federelements 40 an, welcher zumindest im Wesentlichen schräg zum ersten Federbereich 38 verläuft. Über den Griffbereich 46 ist das Federelement 40 besonders einfach handhabbar und somit auf einfache Weise mit dem Befestigungselement 27 zu verclipsen und wieder von diesem zu demontieren.

Wie den Fig. 6 und 7 zu entnehmen ist, ist der erste Federbereich 38 zwischen den Federbereichen 42, 44 angeordnet und stellt somit einen mittleren Federteil dar, welcher den Befestigungsbolzen 24, welcher beispielsweise ein vorderer Befestigungsbolzen der Nachtsichtkamera 10 ist, in der Aufnahme 32 fixiert. Das heißt, dass der erste Federbereich 38 den Befestigungsbolzen 24 in die erste Richtung in die Aufnahme 32 drückt.

Wie insbesondere der Fig. 6 zu entnehmen ist, weist die Aufnahme 32 einen Hinterschnitt 48 auf, so dass der Befestigungsbolzen 24 und damit die Nachtsichtkamera 10 auch in eine zumindest im Wesentlichen senkrecht zur Befestigungsplatte 26 verlaufende zweite Richtung in der Aufnahme 32 gehalten ist.

Die außenseitigen Federbereiche 42, 44 beidseitig des ersten Federbereichs 38 dienen der Nachtsichtkamera 10 als Auflage, so dass die Nachtsichtkamera 10 auch in die schräg, insbesondere senkrecht, zur ersten Richtung verlaufende zweite Richtung mittels des Federelements 40 an dem Befestigungselement 27 gehalten ist. Diese zweite Richtung ist durch einen zweiten Kraftpfeil F2 angedeutet und verläuft zumindest im Wesentlichen senkrecht zur Befestigungsplatte 26. Dies bedeutet, dass die Nachtsichtkamera 10 über ihr Gehäuse 12 an den Federbereichen 42, 44 in die zweite Richtung abgestützt ist und mittels des Federelements 40 auch in die zweite Richtung kraftbeaufschlagt an dem Befestigungselement 27 gehalten ist. Die einerseits sich in Stützanlage mit dem Gehäuse 12 befindenden Federbereiche 42, 44 befinden sich andererseits mit einer der Nachtsichtkamera 10 zugewandten Oberfläche 50 der Befestigungsplatte 26 in Stützanlage und dienen zum Ausgleich von beispielsweise fertigungsbedingten Toleranzen. So ist es möglich, die Nachtsichtkamera 10 winkelgenau und präzise relativ zum Befestigungselement 27 und damit zum übrigen Personenkraftwagen auszurichten, so dass ihr Sichtfeld 22 vorteilhaft relativ zum übrigen Personenkraftwagen ausgerichtet ist. Dies kommt der Funktionserfüllung der Nachtsichtkamera 10 zugute.

Daraus ist es ersichtlich, dass das Federelement 40 aufgrund seiner drei Federbereiche 38, 42, 44 eine mehrachsige Befestigung der Nachtsichtkamera 10 an dem Befestigungselement 27 ermöglicht. Dabei ist es möglich, die Nachtsichtkamera 10 ausschließlich mittels des einen Federelements 40 an dem Befestigungselement 27 zu haltern. Die geschilderte Funktionsintegration des Federelements 40 führt zu einer geringen Teileanzahl und damit zu einem geringen Gewicht sowie zu geringen Kosten der Befestigungsanordnung 28.

## Patentansprüche

1. Befestigungsanordnung (28) eines Sensorelements (10), insbesondere einer Kamera (10), an einem Befestigungselement (27) eines Kraftwagens, bei welcher das Sensorelement (10) mittels einer durch einen Federbereich (38) eines Federelements (40) erzeugten und in eine Richtung orientierten Kraft (F1) an einem Halteelement (30) des Befestigungselements (27) gehalten ist,
**dadurch gekennzeichnet, dass**
das Federelement (40) einen sich an den ersten Federbereich (38) zumindest mittelbar anschließenden und schräg oder senkrecht zu dem ersten Federbereich (38) verlaufenden, zwischen dem Befestigungselement (27) und dem Sensorelement (10) angeordneten zweiten Federbereich (42) aufweist, an welchem das Sensorelement (10) in eine zur ersten Richtung schräg oder senkrecht verlaufende zweite Richtung abgestützt ist, wobei das Federelement (40) über den zweiten Federbereich (42) in die zweite Richtung an dem Befestigungselement (27) abgestützt ist und wobei der zweite Federbereich (42) an einer dem Sensorelement (10) zugewandten und schräg oder senkrecht zur zweiten Richtung verlaufenden Fläche (50) des Befestigungselements (27) zumindest mittelbar anliegt.

2. Befestigungsanordnung (10) nach Anspruch 1,
**dadurch gekennzeichnet, dass**
das Halteelement (30) des Befestigungselements (27) eine Aufnahme (32), insbesondere mit einem Hinterschnitt (49), aufweist, in welcher das Sensorelement (10) mittels der Kraft (F1) des Federelements (40) gehalten ist.

3. Befestigungsanordnung (28) nach einem der Ansprüche 1 oder 2,
**dadurch gekennzeichnet, dass**
das Federelement (40) mit dem Befestigungselement (27) verrastet ist.

4. Befestigungsanordnung (28) nach einem der vorhergehenden Ansprüche, **dadurch gekennzeichnet, dass**
der erste Federbereich (38) mittig zwischen dem zweiten und dem dritten Federbereich (42, 44) angeordnet ist.

5. Befestigungsanordnung (28) nach einem der vorhergehenden Ansprüche, **dadurch gekennzeichnet, dass**
das Federelement (40) einen sich an den ersten Federbereich (38) anschließenden und schräg zu dem ersten Federbereich (38) verlaufenden Griffbereich (46) aufweist, mittels welchem das Federelement (40) handhabbar ist.

6. Befestigungsanordnung (28) nach einem der vorhergehenden Ansprüche, **dadurch gekennzeichnet, dass**
das Federelement (40) einstückig ausgebildet ist.

7. Befestigungsanordnung (28) nach einem der vorhergehenden Ansprüche, **dadurch gekennzeichnet, dass**
das Befestigungselement (27) einstückig ausgebildet ist.

8. Befestigungsanordnung (28) nach einem der vorhergehenden Ansprüche, **dadurch gekennzeichnet, dass**
das Befestigungselement (27) aus einem Kunststoff gebildet ist.

9. Befestigungsanordnung (28) nach einem der vorhergehenden Ansprüche, **dadurch gekennzeichnet, dass**
das Federelement (40) zumindest im Wesentlichen aus einem metallischen Werkstoff gebildet ist.

## Claims

1. Fastening arrangement (28) for securing a sensor element (10), in particular a camera (10), to a fastening element (27) of a motor vehicle, wherein the sensor element (10) is held on a holding element (30) of the fastening element (27) by a force (F1) generated by a spring region (38) of a spring element (40) and oriented in one direction,
**characterised in that**
wherein the spring element (40) comprises a second spring region (42), which at least indirectly adjoins the first spring region (38), extends at an angle or a right angle to the first spring region (38) and is located between the fastening element (27) and the sensor element (10), and on which the sensor element (10) is supported in a second direction extending at an angle or a right angle to the first direction, wherein the spring element (40) is supported in the second direction on the fastening element (27) via the second spring region (42), and wherein the second spring region (42) at least indirectly contacts a surface (50) of the fastening element (27) which faces the sensor element (10) and extends at an angle or a right angle to the second direction.

2. Fastening arrangement (28) according to claim 1,
**characterised in that**
the holding element (30) of the fastening element (27) has a receptacle (32), in particular with an undercut (49), in which the sensor element (10) is held by the force (F1) of the spring element (40).

3. Fastening arrangement (28) according to claim 1 or 2,
**characterised in that**
the spring element (40) is latched to the fastening element (27).

4. Fastening arrangement (28) according to any of the preceding claims, **characterised in that**
the first spring region (38) is located centrally between the second and the third spring region (42, 44).

5. Fastening arrangement (28) according to any of the preceding claims, **characterised in that**
the spring element (40) has a handle region (46), which adjoins the first spring region (38) and extends at an angle to the first spring region (38), and by means of which the spring element (40) can be handled.

6. Fastening arrangement (28) according to any of the preceding claims, **characterised in that**
the spring element (40) is designed in one piece.

7. Fastening arrangement (28) according to any of the preceding claims, **characterised in that**
the fastening element (27) is designed in one piece.

8. Fastening arrangement (28) according to any of the preceding claims, **characterised in that**
the fastening element (27) is is made of a plastic material.

9. Fastening arrangement (28) according to any of the preceding claims, **characterised in that**
the spring element (40) is at least substantially made of a metallic material.

## Revendications

1. Système (28) de fixation d'un élément (10) de capteur, en particulier d'une caméra (10), sur un élément (27) de fixation d'un véhicule automobile, l'élément (10) de capteur étant maintenu au moyen d'une force (F1) orientée dans une direction et produite par une zone (38) de ressort d'un élément (40) de ressort sur un élément (30) de retenue de l'élément (27) de fixation, **caractérisé en ce que** l'élément (40) de ressort présente une seconde zone (38) de ressort disposée entre l'élément (27) de fixation et l'élément (10) de capteur, s'assemblant au moins directement à la première zone (38) de ressort et s'étendant obliquement ou perpendiculairement à la première zone (38) de ressort, sur laquelle l'élément (10) de ressort s'appuie dans une seconde direction s'étendant obliquement ou perpendiculairement à la première direction, l'élément (40) de ressort s'appuyant au-dessus de la deuxième zone (42) de ressort dans la seconde direction sur l'élément (27) de fixation et la seconde zone (42) de ressort reposant au moins directement sur une surface (50) de l'élément (27) de fixation orientée vers l'élément (10) de capteur et s'étendant obliquement ou perpendiculairement à la seconde direction.

2. Système (10) de fixation selon la revendication 1, **caractérisé en ce que** l'élément (30) de retenue de l'élément (27) de fixation présente un logement (32), en particulier doté d'une contre-dépouille (49) dans laquelle l'élément (10) de capteur est maintenu par la force (F1) de l'élément (40) de ressort.

3. Système (28) de fixation selon l'une quelconque des revendications 1 ou 2, **caractérisé en ce que** l'élément (40) de ressort vient en prise avec l'élément (27) de fixation.

4. Système (28) de fixation selon l'une quelconque des revendications précédentes, **caractérisé en ce que** la première zone (38) de ressort est aménagée au centre entre la deuxième et la troisième zone (42, 44) de ressort.

5. Système (28) de fixation selon l'une quelconque des revendications précédentes, **caractérisé en ce que** l'élément (40) de ressort présente une zone (46) de préhension s'assemblant à la première zone (38) de ressort et s'étendant obliquement par rapport à la première zone (38) de ressort, ladite zone de préhension permettant de manipuler l'élément (40) de ressort.

6. Système (28) de fixation selon l'une quelconque des revendications précédentes, **caractérisé en ce que** l'élément (40) de ressort est conçu d'un seul tenant.

7. Système (28) de fixation selon l'une quelconque des revendications précédentes, **caractérisé en ce que** l'élément (27) de fixation est conçu d'un seul tenant.

8. Système (28) de fixation selon l'une quelconque des revendications précédentes, **caractérisé en ce que** l'élément (27) de fixation est constitué de matière plastique.

9. Système (28) de fixation selon l'une quelconque des revendications précédentes, **caractérisé en ce que** l'élément (40) de ressort est constitué au moins sensiblement d'une matière métallique.
